# EUROPÄISCHE PATENTSCHRIFT

(11) **EP 2 074 914 B1**
(45) Veröffentlichungstag und Bekanntmachung des Hinweises auf die Patenterteilung: **22.02.2012**
(21) Anmeldenummer: 08106024.6
(22) Anmeldetag: 22.12.2008
(51) Int. Cl.: A47J 27/21

(54) **Elektrisches Haushaltsgerät**
Electric household device
Appareil ménager électrique

(30) Priorität: 25.12.2007 CN 200710302472
(43) Veröffentlichungstag der Anmeldung: 01.07.2009
(73) Patentinhaber: BSH Bosch und Siemens Hausgeräte GmbH, 81739 München (DE)
(72) Erfinder: Hu, Hengzhong, 225652 Jiangsu Gaoyou (CN); Schröder, Bernd, 210008 Nanjing (CN)

(56) Entgegenhaltungen:
- WO-A-98/58579
- WO-A-2007/020161
- CN-Y- 2 508 145
- DE-A1- 2 929 177
- DE-A1- 3 147 992

## Beschreibung

Die vorliegende Erfindung betrifft ein elektrisches Haushaltsgerät, insbesondere einen Warmwasserspeicher, welches ein Gehäuse sowie eine mit dem Gehäuse in abnehmbarer Art und Weise verbundene Wartungs- und Reparaturabdeckung zum Schließen einer Öffnung aufweist, wobei die Wartungs- und Reparaturabdeckung eine in Richtung auf das Gehäuse vorstehende Verbindungswand aufweist, um die Wartungs- und Reparaturabdeckung mit dem Gehäuse zu verbinden.

Die CN 2508145 Y offenbart die Konstruktion eines Gehäuses für einen Warmwasserspeicher, wobei das Gehäuse eine runde Endabdeckung, eine auf der Endabdeckung vorgesehene Öffnung für Überprüfung/Wartung und Reparatur sowie ein innerhalb des Gehäuses vorgesehenes elektrisches Element aufweist. Eine runde Wartungs- und Reparaturabdeckung wird in abnehmbarer Art und Weise an der Endabdeckung befestigt. An der inneren Ringseitenwand der Endabdeckung wird eine rundringförmige Einbuchtungsrille vorgesehen, wobei der Umgebungsrand der Wartungs- und Reparaturabdeckung in die rundringförmige Einbuchtungsrille einfasst. Gleichzeitig werden an der Einbuchtungsrille der Wartungs- und Reparaturabdeckung mehrere Ausbuchtungen vorgesehen und an der äußeren Umgebungsseitenwand der Wartungs- und Reparaturabdeckung werden in diesen Ausbuchtungen entsprechende Aussparungen vorgesehen, so dass der Rand der Wartungs- und Reparaturabdeckung nach Einfassen in die rundringförmige Einbuchtungsrille der Endabdeckung von den Ausbuchtungen festgeklemmt wird.

Weil die Wartungs- und Reparaturabdeckung durch Einfassen ihres Randes in die an der Endabdeckung gebildeten Einbuchtungsrille mit der Endabdeckung verbunden wird, besteht hinsichtlich der Auswahl der Form der Wartungs- und Reparaturabdeckung eine Beschränkung entsprechend der Form der Einbuchtungsrille der Endabdeckung (normalerweise mit Bezug zur Form der Öffnung). Weil es sich bei der Wartungs- und Reparaturabdeckung um einen Faktor für das äußere Erscheinungsbild des elektrischen Haushaltsgerätes handelt, wirkt sich eine monotone Form der Wartungs- und Reparaturabdeckung in Hinblick auf eine vom Hersteller angestrebte Diversifizierung (beispielsweise Diversifizierung des äußeren Erscheinungsbildes) der Produkte ungünstig aus. Anderenfalls muss der Hersteller durch höhere Herstellungskosten das äußere Erscheinungsbild der Produkte verändern. Um beispielsweise verschiedenen Formen der Wartungs- und Reparaturabdeckung zu entsprechen, muss der Hersteller verschiedene Gussformen entwickeln, um andere Teile passend zu der Wartungs- und Reparaturabdeckung herzustellen. Dies betrifft insbesondere das Gehäuse, welches in Verbindung mit der Wartungs- und Reparaturabdeckung steht.

Somit ergibt sich die Aufgabe der vorliegenden Erfindung ein Haushaltsgerät bereitzustellen, bei welchem der Entwickler mehr Spielraum bei der Konzeption des Produktes hat, ohne dass hierfür eine signifikante Steigerung der Herstellungskosten erforderlich ist.

Diese Aufgabe wird durch ein elektrisches Haushaltsgerät mit den Merkmalen des unabhängigen Anspruches gelöst. Vorteilhafte Aus- und Weiterbildungen, welche einzeln oder in Kombination miteinander eingesetzt werden können, sind Gegenstand der abhängigen Ansprüche.

Das erfindungsgemäße elektrische Haushaltsgerät baut auf gattungsgemäßen Haushaltsgeräten dadurch auf, dass eine Verbindungswand zumindest teilweise einen Abstand zum Rand der Wartungs- und Reparaturabdeckung aufweist.

Die vorliegende Erfindung betrifft ein elektrisches Haushaltsgerät, welches ein Gehäuse sowie eine mit dem Gehäuse in abnehmbarer Art und Weise verbundene Wartungs- und Reparaturabdeckung zum Schließen einer Öffnung aufweist, wobei die Wartungs- und Reparaturabdeckung eine in Richtung auf das Gehäuse vorstehende Verbindungswand aufweist, um die Wartungs- und Reparaturabdeckung mit dem Gehäuse zu verbinden, dadurch gekennzeichnet, dass die Verbindungswand zumindest teilweise einen Abstand zum Rand der Wartungs- und Reparaturabdeckung aufweist.

Da die Verbindungswand zumindest teilweise einen Abstand zum Rand der Wartungs- und Reparaturabdeckung aufweist, besteht in Hinblick auf die Form der Wartungs- und Reparaturabdeckung keine Beschränkung entsprechend der Form der Verbindungswand mehr. Daher besteht eine relativ große Auswahl bezüglich der Form der Wartungs- und Reparaturabdeckung und die Entwickler müssen bei der Entwicklung bzw. Konzeption des äußeren Erscheinungsbildes des elektrischen Haushaltsgerätes keine Beschränkungen mehr wegen der Form der Wartungs- und Reparaturabdeckung beachten. Daher kann auch bei verschiedenen Formen der Wartungs- und Reparaturabdeckung die Konstruktion des Gehäuses unverändert gelassen werden.

Vorteilhafte Ausgestaltungen der vorliegenden Erfindung sind Gegenstand der abhängigen Ansprüche, welche einzeln oder in Kombination miteinander eingesetzt werden können.

In einer bevorzugten Ausführung der vorliegenden Erfindung weist das Gehäuse eine entlang der Öffnung vorgesehene Einbuchtungsrille auf, wobei die Verbindungswand zumindest teilweise in die Einbuchtungsrille einfasst. Auf diese Weise kann die Wartungs- und Reparaturabdeckung zuverlässig mit dem Gehäuse verbunden werden und gleichzeitig besteht ein positiver Effekt in Hinblick auf die Bildung einer Dichtung zwischen Gehäuse und Wartungs- und Reparaturabdeckung.

Besonders vorteilhaft ist es, wenn die Verbindungswand einen geschlossenen Ring bildet.

Vorzugsweise ist die Verbindungswand zumindest teilweise gerade.

Besonders vorteilhaft ist es, wenn die Verbindungswand einen ersten Teil aufweist, welcher gegen den Rand der Öffnung stößt.

Bei einem besonders vorteilhaften Ausführungsbeispiel der vorliegenden Erfindung weist die Verbindungswand jeweils einen mit einem ersten Teil verbundenen zweiten Teil und dritten Teil auf, wobei der zweite Teil und dritte Teil parallel zueinander verlaufen und in waagerechter Richtung gerade sind.

Gemäß einem vorteilhaften Ausführungsbeispiel der vorliegenden Erfindung weist das Gehäuse eine mit Kabel verbundener Öffnung sowie eine in abnehmbarer Art und Weise an das Gehäuse vorgesehene Abdeckung zum Verschließen der Öffnung auf, wobei die Abdeckung unabhängig von der Wartungs- und Reparaturabdeckung mit dem Gehäuse verbunden wird. Da Montage und Demontage von Wartungs- und Reparaturabdeckung und Abdeckung unabhängig voneinander erfolgen, ist es beim Öffnen der Wartungs- und Reparaturabdeckung durch das Wartungs- und Reparaturpersonal zwecks Durchführung einer Überprüfung nicht erforderlich, die mit den Kabeln verbundene Abdeckung zu öffnen, was die Überprüfungsarbeiten vereinfacht.

Bevorzugt ist die Öffnung mit der am Gehäuse zwecks Befestigung der Kabel vorgesehenen Kabelausführungsöffnung durchgängig verbunden, wobei die Ebene, auf welcher sich die Öffnung befindet, senkrecht zu der Ebene, auf welcher sich die Kabelausführungsöffnung befindet, positioniert ist.

Vorzugsweise weist die Wartungs- und Reparaturabdeckung kann außerdem eine Wand auf, welche sich zwischen dem eigenen Rand und der Verbindungswand befindet und deren Höhe geringer als die Verbindungswand ist. Auf diese Weise kann die Wartungs- und Reparaturabdeckung noch näher mit dem Gehäuse verbunden werden.

Gemäß einem vorteilhaften Ausführungsbeispiel der vorliegenden Erfindung weist das Gehäuse ein Einbuchtungsteil auf, dessen Form der Wartungs- und Reparaturabdeckung entspricht und für die Aufnahme der Wartungs- und Reparaturabdeckung dient.

Besonders vorteilhaft ist es, wenn die Tiefe des Einbuchtungsteils mit der Dicke bzw. Tiefe der Wartungs- und Reparaturabdeckung im Wesentlichen übereinstimmt. Auf diese Weise kann ein kompaktes elektrisches Haushaltsgerät mit klar strukturiertem äußeren Erscheinungsbild erhalten werden.

Bei dem elektrischen Haushaltsgerät kann es sich insbesondere um einen Warmwassergerät vorzugsweise einen Warmwasserspeicher handeln, welcher einen Wasserspeicherbehälter sowie eine Wärmeisolationsschicht aufweist, die zwischen Gehäuse und Wasserbehälter vorgesehen ist.

Weitere vorteilhafte Ausgestaltungen werden nachfolgend an Hand der in der Zeichnung dargestellten Ausführungsbeispiele, auf welchen die Erfindung jedoch nicht beschränkt ist, näher beschrieben.

Es zeigen schematisch:
- Fig. 1: eine teilweise, dreidimensionale Darstellung eines Warmwassergeräts gemäß einem vorteilhaften Ausführungsbeispiel der vorliegenden Erfindung;
- Fig. 2: die dreidimensionale Darstellung der in Fig. 1 gezeigten Endabdeckung;
- Fig. 3: die dreidimensionale Darstellung der Endabdeckung bei abgenommener Wartungs- und Reparaturabdeckung aus einem anderen Betrachtungswinkel;
- Fig. 4: die vergrößerte Darstellung eines Bereiches mit einer Ecke der Öffnung der Wartungs- und Reparaturabdeckung;
- Fig. 5: die dreidimensionale Darstellung der Wartungs- und Reparaturabdeckung; und
- Fig. 6: die vergrößerte Darstellung des Bereiches der Öffnung mit Verbindung von Wartungs- und Reparaturabdeckung und Kabel.

Bei der nachstehend aufgeführten detaillierten Beschreibung der vorteilhaften Ausführungsbeispiele weisen gleiche oder ähnliche Komponenten dieselben Bezugszeichen auf.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

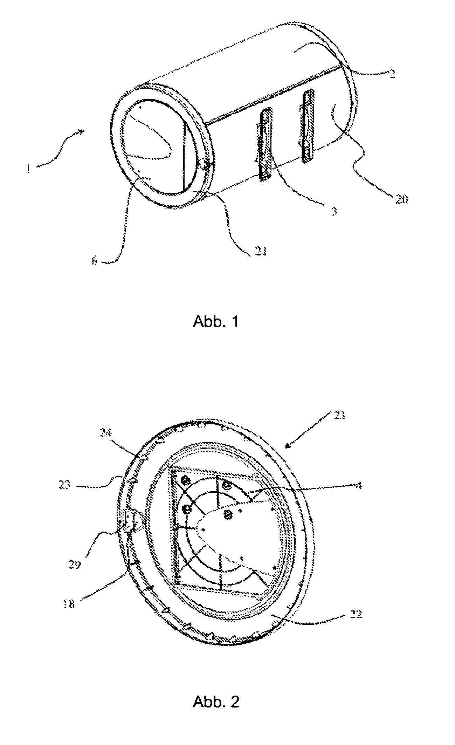

Fig. 1 zeigt die teilweise dreidimensionale Darstellung eines elektrischen Haushaltsgerätes gemäß einem vorteilhaften Ausführungsbeispiel der vorliegenden Erfindung. Bei dem elektrischen Haushaltsgerät handelt es sich beispielsweise um einen Warmwasserspeicher 1. Es ist hervorzuheben, dass die vorliegende Erfindung keineswegs hierauf beschränkt ist, sondern dass die vorliegende Erfindung auch auf andere elektrische Haushaltsgeräte angewendet werden kann - beispielsweise auf elektrische Kühlschränke usw. Der Warmwasserspeicher 1 weist ein Gehäuse 2, einen innerhalb von Gehäuse 2 vorgesehenen Wasserbehälter (nicht dargestellt) sowie eine zwischen Wasserbehälter und Gehäuse 2 befindliche Wärmeisolationsschicht (nicht dargestellt) auf. Das Gehäuse 2 weist einen im Wesentlichen zylindrisch geformten Behälter 20 mit Öffnungen an seinen beiden Enden sowie jeweils mit den beiden Enden vom Behälter 20 verbundene Endabdeckungen 21 auf. An einer Seite vom Behälter 20 wird ein Hängeteil 3 vorgesehen, um den Warmwasserspeicher 1 an einer Wand zu befestigen. Die Wartungs- und Reparaturabdeckung 6 wird in abnehmbarer Art und Weise an einer der Endabdeckungen 21 angebracht. Nachstehend aufgeführt erfolgt eine konkrete Beschreibung der Endabdeckung 21 mit montierter Wartungs- und Reparaturabdeckung 6.

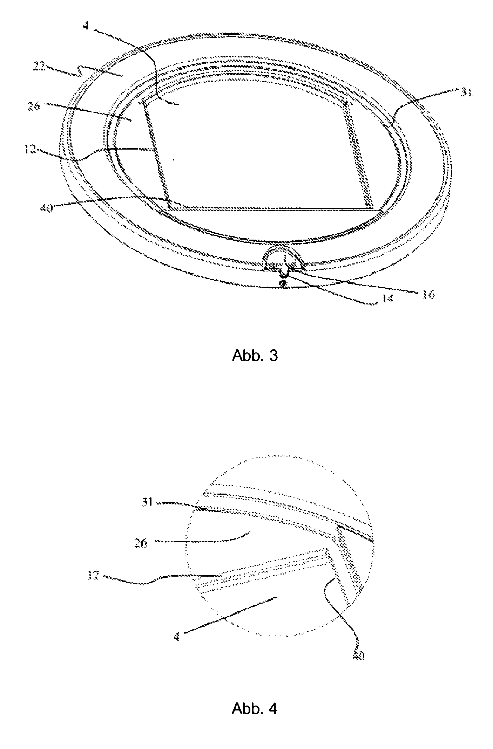

Fig. 2 zeigt die dreidimensionale Darstellung der Endabdeckung 21 mit montierter Wartungs- und Reparaturabdeckung 6. Bei der Fig. 3 handelt es sich um die dreidimensionale Darstellung der Endabdeckung 21 bei abgenommener Wartungs- und Reparaturabdeckung 6. Wie in Fig. 2 gezeigt, weist die Endabdeckung 21 eine Bodenplatte 22 und eine Umrandungswand 23 auf, welche sich entlang des Randes von Bodenplatte 22 senkrecht erstreckt. Mehrere Halteplatten 24 werden entlang der Innenseite der Umrandungswand 23 vorgesehen. Nachdem die Endabdeckung 21 am Behälter 20 befestigt worden ist, wird das Ende der Seitenwand von Behälter 20 zwischen den Halteplatten 24 und der Innenseite der Umrandungswand 23 gehalten.

Wie in Fig. 2, Fig. 3 und Fig. 4 gezeigt, wird in dem mittleren Bereich von Endabdeckung 21 eine Öffnung 4 vorgesehen. Durch die Öffnung 4 kann das Arbeits-/Wartungs- und Reparaturpersonal das innerhalb von Gehäuse 2 befindliche elektrische Element überprüfen/warten und reparieren - beispielsweise Heizelement, Magnesiumstab, Computerfeld des Warmwasserspeichers 1. Unter normalen Umständen wird die Öffnung 4 von einer in abnehmbarer Art und Weise am Gehäuse 2 vorgesehenen Wartungs- und Reparaturabdeckung 6 verschlossen (wie in Fig. 1 und 2 gezeigt). Entlang der Öffnung 4 wird an der Endabdeckung 21 eine schmale längliche Einbuchtungsrille 12 vorgesehen, um die Wartungs- und Reparaturabdeckung 6 zu befestigen. Bei dem vorliegenden Ausführungsbeispiel ist die Einbuchtungsrille 12 kontinuierlich aber nicht geschlossen ausgestaltet. Wie in Fig. 4 gezeigt, wird am Rand 40 keine Einbuchtungsrille 12 vorgesehen.

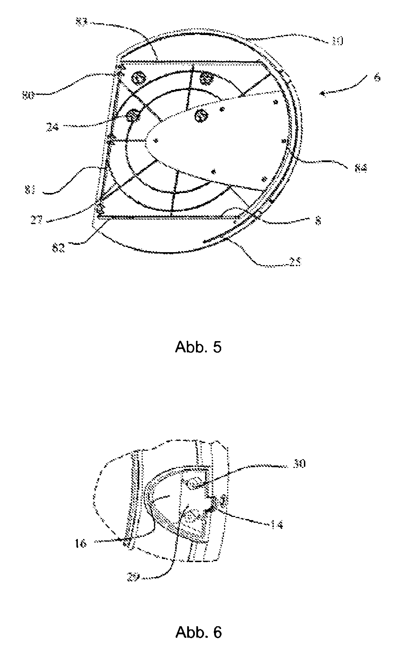

Bei der Fig. 5 handelt es sich um die dreidimensionale Darstellung der von der Endabdeckung 21 abgenommenen Wartungs- und Reparaturabdeckung 6. Wie in Fig. 5 gezeigt, weist die Wartungs- und Reparaturabdeckung 6 im Wesentlichen eine Plattengestalt auf, wobei deren Rand 10 einen bogenförmigen Teil sowie mit den beiden Enden des bogenförmigen Teils verbundenen geradlinigen Teil aufweist. Die Innenseite von der Wartungs- und Reparaturabdeckung 6 - also die dem Gehäuse 2 zugewandte Seite - weist eine Verbindungswand 8 auf, welche einen bestimmten Abstand zum Rand 10 der Wartungs- und Reparaturabdeckung 6 hält.

Die Verbindungswand 8 weist einen ersten Teil 81, ein Hakenteil 80 sowie einen jeweils mit dem ersten Teil 81 verbundenen parallel angeordneten zweiten Teil 82 und dritten Teil 83 auf. Die Höhe des ersten Teils 81 ist geringer als die des zweiten Teils und dritten Teils 82, 83. Der zweite Teil 82 und der dritte Teil 83 sind in waagerechter Richtung gerade, so dass bei der Montage die Wartungs- und Reparaturabdeckung 6 durch den zweiten Teil 82 und den dritten Teil 83 und entlang der Öffnung 4 von Endabdeckung 21 in die vorgesehene Einbuchtungsrille 12 eingepasst werden kann und exakt dafür sorgt, dass das Hakenteil 80 in die innere Oberfläche von Endabdeckung 21 einfassen kann. Die Verbindungswand 8 weist außerdem entsprechend zum ersten Teil 81 vorgesehenes sowie einen mit dem zweiten Teil 82 und dritten Teil 83 verbundenen vierten Teil 84 auf, wobei der vierte Teil 84 eine Bogenform aufweist.

Durch die Abstimmung der Konstruktion der Verbindungswand 8 und Endabdeckung 21 wird die Wartungs- und Reparaturabdeckung 6 mit der Endabdeckung 21 verbunden. Bei der Montage erfolgt über den in der Nähe vom Ende des ersten Teils 81 befindlichen zweiten Teil 82 und dritten Teil 83 an der entsprechenden Stelle der Einbuchtungsrille 12 die Einpassung, so dass das am ersten Teil 81 befindliche Hakenteil 80 durch die Öffnung 4 in die innere Oberfläche von Endabdeckung 21 einfasst, während der erste Teil 81 gegen den Rand 40 von Öffnung 4 stößt. Auf diese Weise kann die Wartungs- und Reparaturabdeckung 6 mit dem Rand 40 von Öffnung 4 als Achse eine Drehbewegung in einem bestimmten Winkel vornehmen. Anschließend werden der zweite Teil, dritte Teil und vierte Teil 82, 83, 84 von Verbindungswand 8 in der Einbuchtungsrille 12 aufgenommen. Ein Teil von Verbindungswand 8 stößt gegen den Rand 40 von Öffnung 4, während der übrige Teil in die schmale längliche Einbuchtungsrille 12 einfasst, so dass die Wartungs- und Reparaturabdeckung 6 zuverlässig am Gehäuse 2 positioniert wird und gleichzeitig ein recht guter Dichtungseffekt bewirkt wird. Vorzugsweise wird zwischen dem Rand 10 von Wartungs- und Reparaturabdeckung 6 und der Verbindungswand 8 außerdem eine Wand 25 vorgesehen, deren Höhe niedriger als die der Verbindungswand 8 ist, wobei die Wand 25 in die an Endabdeckung 21 vorgesehene schmale Rille 31 einfasst, so dass die Wartungs- und Reparaturabdeckung 6 zuverlässig mit dem Gehäuse 2 verbunden werden kann.

Vorzugsweise wird an der Endabdeckung 21 ein in seiner Form der Wartungs- und Reparaturabdeckung 6 entsprechendes Einbuchtungsteil 26 vorgesehen, um die Wartungs- und Reparaturabdeckung 6 aufzunehmen. Noch optimaler ist es, wenn die Tiefe des Einbuchtungsteils 26 mit der Dicke bzw. Tiefe der Wartungs- und Reparaturabdeckung 6 übereinstimmt, so dass die Wartungs- und Reparaturabdeckung 6 sich auf einer Ebene mit den anderen Teilen von Endabdeckung 21 befindet. Dies wirkt sich unter ästhetischem Gesichtspunkt vorteilhaft aus.

An der Innenseite der Wartungs- und Reparaturabdeckung 6 werden mehrere Verstärkungsrippen 27 gebildet. An der Innenseite der Wartungs- und Reparaturabdeckung 6 wird außerdem eine Verbindungskonstruktion 28 zur Befestigung einer Stromkreisplatte (nicht dargestellt) vorgesehen, um die Stromkreisplatte an der Innenseite der Wartungs- und Reparaturabdeckung 6 zu befestigen. Wie in Fig. 3 und Fig. 6 gezeigt, wird ein Ende mit der Stromkreisplatte verbunden, während das andere Ende mit dem an den Steuerungsschalter angeschlossenen Kabel durch die an der Endabdeckung 21 vorgesehene Kabelausführungsöffnung 14 aus dem Inneren des Gehäuses 2 hinausgeführt wird. Durch eine angemessene Ausführung von Form und/oder Abmessungen von Kabelausführungsöffnung 14 und Kabel kann das Kabel in der Kabelausführungsöffnung 14 gehalten werden. Vorzugsweise wird die Kabelausführungsöffnung 14 geschlossen, wenn das Kabel nicht durch die Kabelausführungsöffnung 14 aus dem Gehäuse 2 hinausgeführt werden muss, und die Kabelausführungsöffnung 14 wird geöffnet, wenn das Kabel durch die Kabelausführungsöffnung 14 aus dem Gehäuse 2 hinausgeführt werden muss.

Die Kabelausführungsöffnung wird an der Umrandungswand 23 von Endabdeckung 21 vorgesehen. An der Bodenplatte 22 wird eine Öffnung 16 mit durchgängiger Verbindung zu der Kabelausführungsöffnung 14 vorgesehen, so dass die Kabelausführungsöffnung 14 eine offene Konstruktion bietet und das Kabel bequem in die Kabelausführungsöffnung 14 gedrückt werden kann. Die Öffnung 16 wird durch eine in abnehmbarer Art und Weise mit der Endabdeckung 21 verbundene Abdeckung 18 abgedeckt. Gleichzeit drückt eine Seite der Abdeckung 18 das Kabel fest, so dass das Kabel durch die Haltekraft zwischen sich selbst und der Kabelausführungsöffnung 14 sowie durch die Abdeckung 18 befestigt wird.

Die Abdeckung 18 wird unabhängig von der Wartungs- und Reparaturabdeckung 6 an die Endabdeckung 21 angebracht, so dass es nicht erforderlich ist, zunächst die Abdeckung 18 abzunehmen, um die Wartungs- und Reparaturabdeckung 6 abnehmen zu können beziehungsweise zunächst die Wartungs- und Reparaturabdeckung 6 abzunehmen, um die Abdeckung 18 abnehmen zu können. Wie in Abbildung 2 und Abbildung 6 gezeigt, wird an einer Position entsprechend der Öffnung 21 eine Stützwand 29 vorgesehen, welche sich parallel zu Bodenplatte 22 von der Innenseite der Umgebungswand 21 der Endabdeckung 21 her erstreckt, wobei an der Stützwand 29 ein Aufnahmesockel 30 gebildet wird, welcher mit Schrauben (nicht dargestellt) der Abdeckung 18 befestigt werden kann.

Bei dem vorstehend Ausführungsbeispiel werden der zweite Teil, dritte Teil und vierte Teil 82, 83, 84 der Verbindungswand 8 innerhalb der Einbuchtungsrille 12 am Gehäuse 2 eingefasst, während der erste Teil 81 gegen einen Rand der Öffnung 4 stößt. Allerdings ist die vorliegende Erfindung nicht hierauf beschränkt. Es können sämtliche Teile der Verbindungswand 8 in die Einbuchtungsrille 12 einfassen beziehungsweise können sämtliche Teile gegen den Rand der Öffnung 4 stoßen.

Bei dem vorstehenden Ausführungsbeispiel weist außerdem die Verbindungswand 8 zu dem Rand 10 der Wartungs- und Reparaturabdeckung 6 einen bestimmten Abstand auf. Allerdings ist die vorliegende Erfindung hierauf nicht beschränkt. Beispielsweise kann bei anderen Ausführungsbeispielen zwischen einem Teil der Verbindungswand 8 und dem Rand 10 der Wartungs- und Reparaturabdeckung 6 ein Abstand gehalten werden, während ein anderer Teil über den Rand 10 der Wartungs- und Reparaturabdeckung hervorstehen kann.

### Bezugszeichenliste

- 1: Elektrisches Haushaltsgerät
- 2: Gehäuse
- 3: Hängeteil
- 4: Öffnung
- 6: Wartungs- und Reparaturabdeckung
- 8: Verbindungswand
- 80: Hakenteil
- 81: erster Teil
- 82: zweiter Teil
- 83: dritter Teil
- 84: vierter Teil
- 10: Rand der Verbindungswand 8
- 12: Einbuchtungsrille
- 14: Kabelausführungsöffnung
- 16: Öffnung
- 18: Abdeckung
- 20: Behälter
- 21: Endabdeckung
- 22: Bodenplatte
- 23: Umrandungswand
- 24: Halteplatte
- 25: Wand
- 26: Einbuchtungsteil
- 27: Verstärkungsrippen
- 28: Verbindungskonstruktion
- 29: Stützkonstruktion
- 30: Aufnahmesockel
- 31: Schmale Rille
- 40: Rand

## Patentansprüche

1. Elektrischer Warmwasserspeicher (1), welcher ein Gehäuse (2, 20, 21) sowie eine mit dem Gehäuse (2, 20, 21) in abnehmbarer Art und Weise verbundene Wartungs- und Reparaturabdeckung (6) zum Schließen einer Öffnung (4) aufweist, wobei die Wartungs- und Reparaturabdeckung (6) eine in Richtung auf das Gehäuse (2, 20, 21) vorstehende Verbindungswand (8) aufweist, um die Wartungs- und Reparaturabdeckung (6) mit dem Gehäuse (2, 21) zu verbinden, **dadurch gekennzeichnet, dass** die Verbindungswand (8) zumindest teilweise einen Abstand zum Rand (10) der Wartungs- und Reparaturabdeckung (6) aufweist.

2. Warmwasserspeicher (1) gemäß Patentanspruch 1, **dadurch gekennzeichnet, dass** das Gehäuse (2, 21) eine entlang der Öffnung (4) vorgesehene Einbuchtungsrille (12) aufweist, wobei die Verbindungswand (8) zumindest teilweise in die Einbuchtungsrille (12) einfasst.

3. Warmwasserspeicher (1) nach einem der vorherigen Patentansprüche, **dadurch gekennzeichnet, dass** die Verbindungswand (8) einen geschlossenen Ring bildet.

4. Warmwasserspeicher (1) nach einem der vorherigen Patentansprüche, **dadurch gekennzeichnet, dass** die Verbindungswand (8) zumindest teilweise gerade ist.

5. Warmwasserspeicher (1) nach einem der vorherigen Patentansprüche, **dadurch gekennzeichnet, dass** die Verbindungswand (8) einen ersten Teil (81) aufweist, welcher gegen den Rand (40) der Öffnung (4) stößt.

6. Warmwasserspeicher (1) gemäß Patentanspruch 5, **dadurch gekennzeichnet, dass** die Verbindungswand (8) jeweils einen mit dem ersten Teil (81) verbundenen zweiten Teil (82) und dritten Teil (83) aufweist, wobei der zweite Teil (82) und dritte Teil (83) parallel zueinander und in waagerechter Richtung gerade sind.

7. Warmwasserspeicher (1) nach einem der vorherigen Patentansprüche, **dadurch gekennzeichnet, dass** das Gehäuse (2, 21) eine mit Kabel verbundene Öffnung (16) sowie eine in abnehmbarer Art und Weise an das Gehäuse (2, 21) vorgesehene Abdeckung (18) zum Verschließen der Öffnung (16) aufweist, wobei die Abdeckung (18) unabhängig von der Wartungs- und Reparaturabdeckung (6) mit dem Gehäuse (2, 21) verbunden wird.

8. Warmwasserspeicher (1) gemäß Patentanspruch 7, **dadurch gekennzeichnet, dass** die Öffnung (16) mit der am Gehäuse (2, 21) zwecks Befestigung der Kabel vorgesehenen Kabelausführungsöffnung (14) durchgängig verbunden ist, wobei die Ebene, auf welcher sich die Öffnung (16) befindet, senkrecht zu der Ebene, auf welcher sich die Kabelausführungsöffnung (14) befindet, positioniert ist.

9. Warmwasserspeicher (1) nach einem der vorherigen Patentansprüche, **dadurch gekennzeichnet, dass** die Wartungs- und Reparaturabdeckung (6) außerdem eine Wand (25) aufweist, welche sich zwischen dem eigenen Rand (10) und der Verbindungswand (8) befindet und deren Höhe geringer als die der Verbindungswand (8) ist.

10. Warmwasserspeicher (1) nach einem der vorherigen Patentansprüche, **dadurch gekennzeichnet, dass** das Gehäuse (2, 21) ein Einbuchtungsteil (26) aufweist, dessen Form der Wartungs- und Reparaturabdeckung (6) entspricht und der Aufnahme von der Wartungs- und Reparaturabdeckung (6) dient.

11. Warmwasserspeicher (1) nach Patentanspruch 10, **dadurch gekennzeichnet, dass** die Tiefe des Einbuchtungsteils (26) mit der Dicke bzw. Tiefe der Wartungs- und Reparaturabdeckung (6) im Wesentlichen übereinstimmt.

12. Warmwasserspeicher (1) nach einem der vorherigen Patentansprüche, **dadurch gekennzeichnet, dass** der Warmwasserspeicher (1) einen Wasserspeicherbehälter sowie eine Wärmeisolationsschicht aufweist, die zwischen Gehäuse (2, 20, 21) und Wasserbehälter vorgesehen wird.

## Claims

1. Electric hot-water cylinder (1) comprising a housing (2, 20, 21) and a maintenance and repair cover (6), which is connected with the housing (2, 20, 21) in removable mode and manner, for closing an opening (4), wherein the maintenance and repair cover (6) has a connecting wall (8) projecting in direction towards the housing (2, 20, 21) in order to connect the maintenance and repair cover (6) with the housing (2, 21), **characterised in that** the connecting wall (8) has at least in part a spacing from the edge (10) of the maintenance and repair cover (6).

2. Hot-water cylinder (1) according to claim 1, **characterised in that** the housing (2, 21) has an indentation groove (12) provided along the opening (4), wherein the connecting wall (8) is at least partly gripped in the indentation groove (12).

3. Hot-water cylinder (1) according to one of the preceding claims, **characterised in that** the connecting wall (8) forms a closed ring.

4. Hot-water cylinder (1) according to any one of the preceding claims, **characterised in that** the connecting wall (8) is at least in part straight.

5. Hot-water cylinder (1) according to any one of the preceding claims, **characterised in that** the connecting wall (8) has a first part (81) abutting against the edge (40) of the opening (4).

6. Hot-water cylinder (1) according to claim 5, **characterised in that** the connecting wall (8) comprises a second part (82) and a third part (83) each connected with the first part (81), wherein the second part (82) and third part (83) are parallel to one another and straight in horizontal direction.

7. Hot-water cylinder (1) according to any one of the preceding claims, **characterised in that** the housing (2, 21) has an opening (16), which is connected with a cable, as well as a cover (18) provided in removable mode and manner at the housing (2, 21) for closing the opening (16), wherein the cover (18) is connected with the housing (2, 21) independently of the maintenance and repair cover (6).

8. Hot-water cylinder (1) according to claim 7, **characterised in that** the opening (16) is uninterruptedly connected with the cable lead-out opening (14) provided at the housing (2, 21) for the purpose of fastening the cable, wherein the plane on which the opening (16) is located is positioned perpendicularly to the plane on which the cable lead-out opening (14) is located.

9. Hot-water cylinder (1) according to any one of the preceding claims, **characterised in that** the maintenance and repair cover (6) additionally has a wall (25) which is located between its own edge (10) and the connecting wall (8) and the height of which is less than that of the connecting wall (8).

10. Hot-water cylinder (1) according to any one of the preceding claims, **characterised in that** the housing (2, 21) has an indentation part (26), the shape of which corresponds with the maintenance and repair cover (6) and which serves for reception of the maintenance and repair cover (6).

11. Hot-water cylinder (1) according to claim 10, **characterised in that** the depth of the indentation part (26) substantially corresponds with the thickness or depth of the maintenance and repair cover (6).

12. Hot-water cylinder (1) according to any one of the preceding claims, **characterised in that** the hot-water cylinder (1) comprises a water storage container as well as a thermal insulating layer which is provided between the housing (2, 20, 21) and the water container.

## Revendications

1. Chauffe-eau électrique à accumulation (1), lequel présente un boîtier (2, 20, 21) ainsi qu'un couvercle de maintenance et de réparation (6) raccordé au boîtier (2, 20, 21) de manière amovible et destiné à fermer une ouverture (4), le couvercle de maintenance et de réparation (6) présentant une paroi de liaison (8) dépassant en direction du boîtier (2, 20, 21) afin de raccorder le couvercle de maintenance et de réparation (6) au boîtier (2, 21), **caractérisé en ce que** la paroi de liaison (8) présente au moins en partie un écart par rapport au bord (10) du couvercle de maintenance et de réparation (6).

2. Chauffe-eau à accumulation (1) selon la revendication 1, **caractérisé en ce que** le boîtier (2, 21) présente une rainure creuse (12) ménagée le long de l'ouverture (4), la paroi de liaison (8) ayant prise au moins en partie dans la rainure creuse (12).

3. Chauffe-eau à accumulation (1) selon l'une quelconque des revendications précédentes, **caractérisé en ce que** la paroi de liaison (8) forme un anneau fermé.

4. Chauffe-eau à accumulation (1) selon l'une quelconque des revendications précédentes, **caractérisé en ce que** la paroi de liaison (8) est rectiligne au moins en partie.

5. Chauffe-eau à accumulation (1) selon l'une quelconque des revendications précédentes, **caractérisé en ce que** la paroi de liaison (8) présente une première partie (81) qui bute contre le bord (40) de l'ouverture (4).

6. Chauffe-eau à accumulation (1) selon la revendication 5, **caractérisé en ce que** la paroi de liaison (8) présente resp. une deuxième partie (82) et une troisième partie (83) raccordée à la première partie (81), la deuxième partie (82) et la troisième partie (83) étant parallèles l'une à l'autre et rectiligne en direction horizontale.

7. Chauffe-eau à accumulation (1) selon l'une quelconque des revendications précédentes, **caractérisé en ce que** le boîtier (2, 21) présente une ouverture (16) raccordée par des câbles ainsi qu'un couvercle (18) ménagé sur le boîtier (2, 21) de manière amovible et destiné à fermer l'ouverture (16), le couvercle (18) étant raccordé au boîtier (2, 21) indépendamment du couvercle de maintenance et de réparation (6).

8. Chauffe-eau à accumulation (1) selon la revendication 7, **caractérisé en ce que** l'ouverture (16) est raccordée en continu à l'ouverture (14) de passage des câbles ménagée sur le boîtier (2, 21) pour fixer les câbles, le plan sur lequel se trouve l'ouverture (16) étant positionné perpendiculairement au plan sur lequel se trouve l'ouverture (14) de passage des câbles.

9. Chauffe-eau à accumulation (1) selon l'une quelconque des revendications précédentes, **caractérisé en ce que** le couvercle de maintenance et de réparation (6) présente en outre une paroi (25), laquelle se trouve entre son propre bord (10) et la paroi de liaison (8) et dont la hauteur est plus petite que celle de la paroi de liaison (8).

10. Chauffe-eau à accumulation (1) selon l'une quelconque des revendications précédentes, **caractérisé en ce que** le boîtier (2, 21) présente une partie creuse (26) dont la forme correspond au couvercle de maintenance et de réparation (6) et sert au logement du couvercle de maintenance et de réparation (6).

11. Chauffe-eau à accumulation (1) selon la revendication 10, **caractérisé en ce que** la profondeur de la partie creuse (26) concorde essentiellement avec l'épaisseur resp. la profondeur du couvercle de maintenance et de réparation (6).

12. Chauffe-eau à accumulation (1) selon l'une quelconque des revendications précédentes, **caractérisé en ce que** le chauffe-eau à accumulation (1) présente un réservoir d'accumulation d'eau ainsi qu'une couche d'isolation thermique qui est ménagée entre le boîtier (2, 20, 21) et le réservoir d'eau.
